Europäisches Patentamt

European Patent Office

Office européen des brevets

(11) Numéro de publication : **0 493 200 B1**

(12) **FASCICULE DE BREVET EUROPEEN**

(45) Date de publication du fascicule du brevet :
**17.05.95 Bulletin 95/20**

(51) Int. Cl.$^6$ : **G01C 19/72**

(21) Numéro de dépôt : **91403442.6**

(22) Date de dépôt : **18.12.91**

(54) **Gyromètre en anneau à modulateur électro-optique.**

(30) Priorité : **21.12.90 FR 9016122**

(43) Date de publication de la demande :
**01.07.92 Bulletin 92/27**

(45) Mention de la délivrance du brevet :
**17.05.95 Bulletin 95/20**

(84) Etats contractants désignés :
**DE ES GB IT**

(56) Documents cités :
**EP-A- 0 358 533**
**EP-A- 0 388 929**
**GB-A- 2 152 207**

(73) Titulaire : **SOCIETE D'APPLICATIONS
GENERALES D'ELECTRICITE ET DE
MECANIQUE S A G E M
6, Avenue d'Iéna
F-75783 Paris Cedex 16 (FR)**

(72) Inventeur : **Rochereau, Jacques
28 Rue de Vigneronde
F-95100 Argenteuil (FR)**
Inventeur : **Leclerq, Claude
14 Grande Rue
F-95690 Frouville (FR)**

(74) Mandataire : **Fort, Jacques
CABINET PLASSERAUD
84, rue d'Amsterdam
F-75009 Paris (FR)**

Il est rappelé que : Dans un délai de neuf mois à compter de la date de publication de la mention de la
délivrance du brevet européen toute personne peut faire opposition au brevet européen délivré, auprès
de l'Office européen des brevets. L'opposition doit être formée par écrit et motivée. Elle n'est réputée
formée qu'après paiement de la taxe d'opposition (Art. 99(1) Convention sur le brevet européen).

## Description

L'invention concerne les gyromètres du type comportant un guide diélectrique d'ondes en anneau ; une source électromagnétique munie d'un séparateur pour envoyer dans l'anneau deux ondes contrarotatives provenant de la source ; un détecteur d'interférence recevant les ondes contrarotatives ; des premiers moyens électro-optiques commandés pour donner aux ondes une modulation périodique alternative et symétrique de phase, à une période sensiblement double du temps de parcours de l'anneau, placés en amont de l'anneau pour une onde et en aval pour l'autre ; des seconds moyens attaqués par un générateur de rampe de déphasage de pente réglable, placés en amont de l'anneau pour une onde et en aval pour l'autre ; et des moyens électroniques de bouclage et de mesure commandant le sens et la valeur de la pente de la rampe pour annuler le déphasage des ondes reçues par le détecteur d'interférence.

Il existe de très nombreux documents, par exemple FR-A- 2471583, décrivant des gyromètres du type ci-dessus défini, dont le guide diélectrique est généralement une fibre optique constituant une bobine de quelques centaines de spires. Ces gyromètres sont basés sur l'effet Sagnac : lorsque deux ondes polarisées rectilignes provenant de la même source sont injectées dans une bobine de fibre et contrarotatives, puis sont combinées au niveau d'un détecteur, les chemins optiques sont égaux lorsque le gyromètre est fixe. La puissance reçue par le détecteur est alors maximum. Si en revanche la bobine tourne à vitesse $\Omega$ autour de son axe, les ondes parcourent deux chemins optiques différents, ce qui se traduit par un déphasage $\phi_s$ :

$$\phi_s = (4\pi \, LR) \, \Omega \, / \, \lambda_0 \, c_0$$

où L est la longueur totale de la fibre, R le rayon de la bobine, $\lambda_0$ la longueur d'onde dans le vide et $c_0$ la vitesse de la lumière dans le vide.

La puissance instantanée P reçue par le détecteur est alors ; $P = P_0/2 \, (1 + \cos \phi_s)$ ;
où $P_0$ est la puissance reçue en l'absence de rotation.

Un gyromètre réalisé de façon à fournir $\Omega$ par simple mesure de $P/P_0$ serait dans la pratique inutilisable. Les gyromètres du type ci-dessus défini permettent d'écarter deux défauts importants du montage de principe.

Un premier défaut est dû à ce que $P/P_0$ varie de façon faible et non linéaire, puisque $\cos \phi_s$, varie peu lorsque $\phi_s$ est proche de zéro. Les premiers moyens électrooptiques du gyromètre mentionné ci-dessus amènent le point de mesure dans une zone où le facteur d'échelle est élevé et la variation de signal en fonction de la vitesse sensiblement linéaire. Ces moyens modulateurs reçoivent un signal, souvent qualifié de "dither" ayant une période à peu près double du temps de parcours de l'anneau (c'est-à-dire du temps de propagation dans la fibre optique) et une amplitude correspondant approximativement à une variation de phase de $\pi/2$. Ce décalage de phase est appliqué en premier à une des ondes, en second à l'autre du fait de la propagation dans la fibre, puisque les moyens modulateurs sont placés en amont de la fibre pour une onde et en aval pour l'autre. Le gyromètre est ainsi polarisé alternativement à peu près au point de demi-intensité de chaque côté du maximum de la frange d'interférences.

Un second défaut est que, dans sa constitution de base, le gyromètre n'est pas un appareil de zéro. Dans les gyromètres du type ci-dessus défini, ce défaut est écarté en introduisant un déphasage non réciproque, c'est-dire n'ayant pas le même effet sur les deux ondes contrarotatives $\phi_r$ entre les deux ondes, de façon à avoir $\phi_s - \phi_R = 0$. $\phi_R$ est généré à l'aide d'une rampe de déphasage linéaire appliquée à des moyens de rampe de déphasage en optique intégrée placés en amont de l'anneau pour une onde et en aval pour l'autre. La rampe est réglable pour annuler $\phi_s - \phi_r$. La phase d'une onde est ainsi décalée avant qu'elle ne parcoure la bobine tandis que l'autre est décalée après qu'elle ait parcouru la bobine, ce qui se traduit par un décalage de phase entre les ondes égal à la différence entre deux rampes identiques décalées temporellement de la durée de parcours de l'anneau.

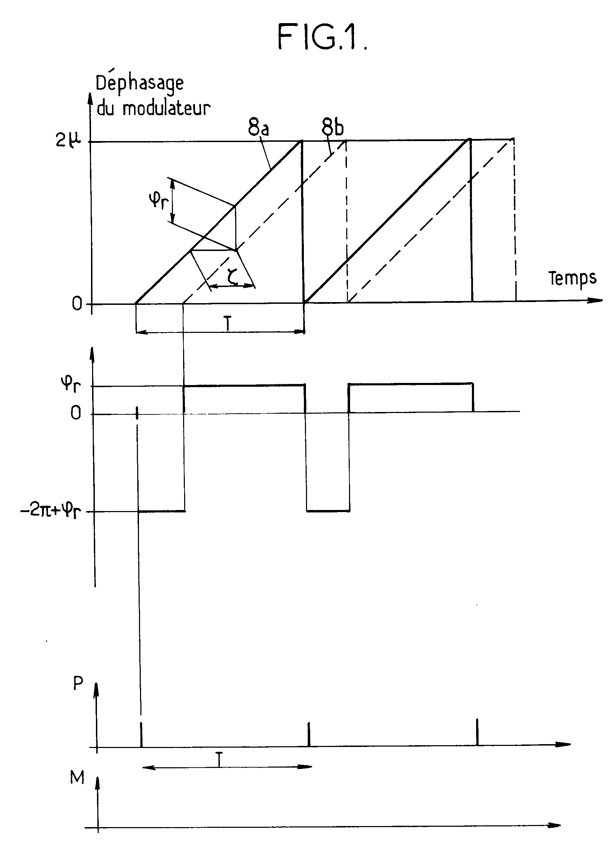

Le diagramme temporel de la figure 1 montre le décalage de phase $\phi_r$ entre les deux ondes provoqué par les rampes 8a et 8b décalées du temps $\tau$ de propagation dans la fibre. Le déphasage $\phi_r$ est constant et proportionnel à la pente de la rampe, dont le sens dépend du signe de la vitesse d'entrée $\Omega$.

La remise à zéro de la rampe, à l'issue de chaque intervalle de temps correspondant à une variation de phase de $2\pi$, est nécessaire car il est impossible de laisser croître la rampe jusqu'à l'infini. Cette remise à zéro périodique ramène la mesure de vitesse angulaire $\Omega$ à une mesure de la fréquence des retours à zéro. La pente de la rampe est ajustée pour obtenir $\phi_s - \phi_r = 0$, donc $\phi_r = -\phi_s$. On a alors $\phi_S = 2\pi \, \tau/T$. La fréquence des remises à zéro est alors $2R\Omega/n\lambda_0$. Il suffit alors de fournir un signal à la période de retour à zéro T sur une sortie P pour un sens de rotation, sur une sortie M pour l'autre sens de rotation, pour disposer de la vitesse par mesure de fréquence ou comptage du nombre d'impulsions apparaissant sur la sortie P ou M par unité de temps.

Les gyromètres existants construits sur ce principe présentent des limitations, dues notamment à ce que la remise à zéro de la rampe se fait de façon asynchrone avec la modulation de polarisation ou "dither", ce qui perturbe la détection, et à ce qu'elle n'est pas instantanée, ce qui sensibilise la linéarité du facteur d'échelle avec le temps de décharge.

L'invention vise notamment à écarter ces défauts ou du moins à les réduire de façon notable. Elle propose dans ce but un gyromètre ayant des moyens pour, en réponse aux inversions de polarité des premiers moyens électro-optiques, interrompre la rampe du générateur de déphasage.

Dans ce but le générateur de rampe est avantageusement constitué par un générateur de courant constant ajustable alimentant un condensateur placé en parallèle avec le déphaseur électro-optique et les moyens de retour à zéro comprennent un second générateur de courant fournissant une quantité de charges modifiant la phase de $2\pi$ en un temps inférieur d'au moins un ordre de grandeur à la période $2\tau$ de modulation.

L'invention sera mieux comprise à la lecture de la description qui suit d'un mode particulier de réalisation, donné à titre d'exemple non limitatif. La description se réfère aux dessins qui l'accompagnent, dans lesquels :

- la figure 1, déjà mentionnée, est un diagramme temporel montrant l'allure du déphasage des signaux dans un gyromètre de type connu ;
- la figure 2 est un schéma de principe d'un gyromètre à fibre optique, de constitution générale connue mais permettant de mettre en oeuvre l'invention ;
- la figure 3 est un synoptique montrant une constitution possible d'un générateur de rampe conforme à un mode de réalisation particulier de l'invention ;
- la figure 4 est un synoptique montrant l'allure des signaux qui apparaissent en différents points du synoptique de la figure 3.

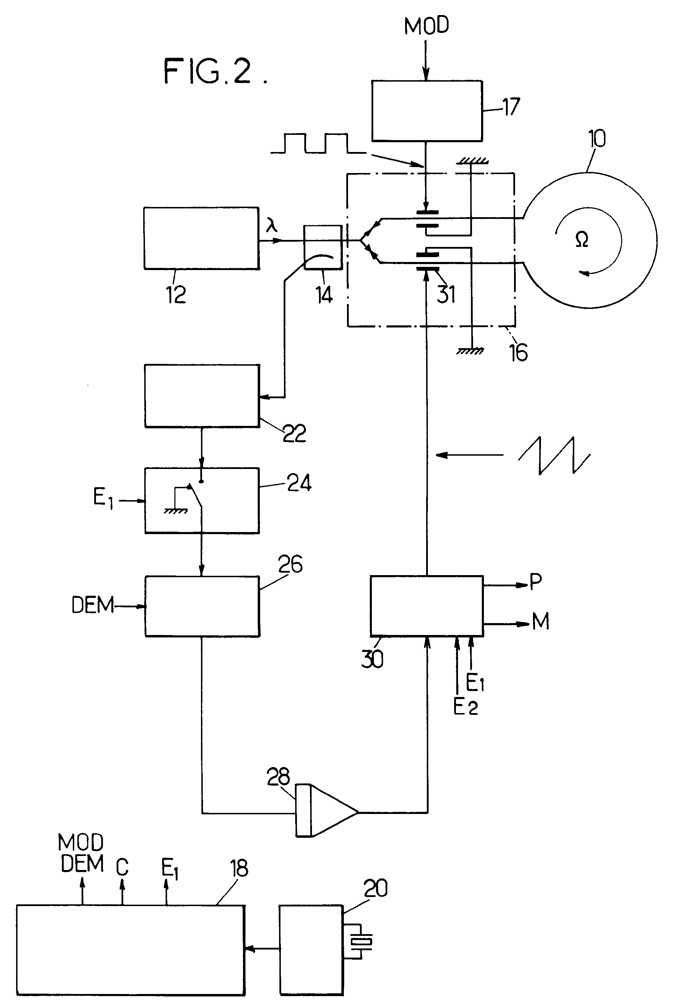

Le gyromètre montré en figure 2 a une constitution générale qui est connue et en conséquence ne sera que sommairement décrite. Il comprend un guide diélectrique en anneau 10, constitué généralement par une bobine de fibre optique, pouvant avoir de 100 à 1 000 mètres de longueur avec un rayon de l'ordre du centimètre. Une source 12 de lumière cohérente et à polarisation linéaire, telle qu'une diode laser, alimente les deux extrémités de la fibre par l'intermédiaire d'un ensemble en optique intégrée 16. Un dérivateur 14 placé entre la source 12 et l'optique intégrée permet de récupérer la puissance fournie par des ondes qui ont parcouru en sens inverses le guide en anneau 10.

L'ensemble en optique intégrée comprend un séparateur envoyant une puissance égale vers les deux extrémités de la fibre. Il comporte également des moyens modulateurs de phase électro-optiques, recevant, d'un circuit modulateur 17, un signal électrique périodique, alternatif à période T à peu près double du temps $\tau$ du parcours de l'anneau (temps dont les variations avec la vitesse de rotation $\Omega$ sont négligeables), dont l'amplitude est telle qu'elle provoque une commutation de phase optique de $\pi/2$ ; ce signal amène les points de mesure dans des zones où la sensibilité et la linéarité sont maximales.

Ce signal périodique peut notamment être carré et être synchronisé par un signal MOD provenant d'une base de temps 18 qui reçoit un signal à fréquence fixe d'une horloge 20.

Le produit de l'interférence des ondes contrarotatives qui ont traversé la bobine est envoyé par le dérivateur 14 vers une chaîne de mesure et de bouclage. La chaîne représentée comprend un module 22 de détection, de préamplification et d'adaptation d'impédance suivi d'un commutateur analogique 24 et d'un démodulateur 26. Ces modules reçoivent des signaux de commande et de référence $E_1$ et DEM fournis par la base de temps 18.

Le signal continu démodulé, dont on verra qu'il constitue un signal d'écart $\Delta\phi = \phi_s - \phi_r$, est appliqué à un intégrateur 28 alimentant une entrée de commande de pente d'un générateur analogique de rampe 30.

Le générateur 30 attaque un des moyens déphaseurs électro-optiques 31 placés sur une extrémité de l'anneau. Sur la figure 2, ces moyens déphaseurs sont distincts du déphaseur de modulation et placés à l'extrémité opposée de l'anneau. Mais ils pourraient être placés à la même extrémité et même confondus avec lui. Le générateur 30 est prévu pour fournir, sur une sortie P ou M, suivant le sens de la rampe, une impulsion à chaque remise à zéro (dès que la rampe atteint une amplitude correspondant à un déphasage optique de $2\pi$ dans les gyromètres connus).

La fréquence des impulsions sur la sortie P ou M est représentative de la vitesse angulaire, chaque impulsion correspondant à un angle de rotation donné.

Conformément à l'invention, la remise à zéro du générateur de rampe 30 est synchronisée avec l'inversion de polarité du signal de sortie du modulateur 17 et elle modifie la tension appliquée au déphaseur électro-optique d'une valeur réduisant de $2\pi$ le déphasage optique.

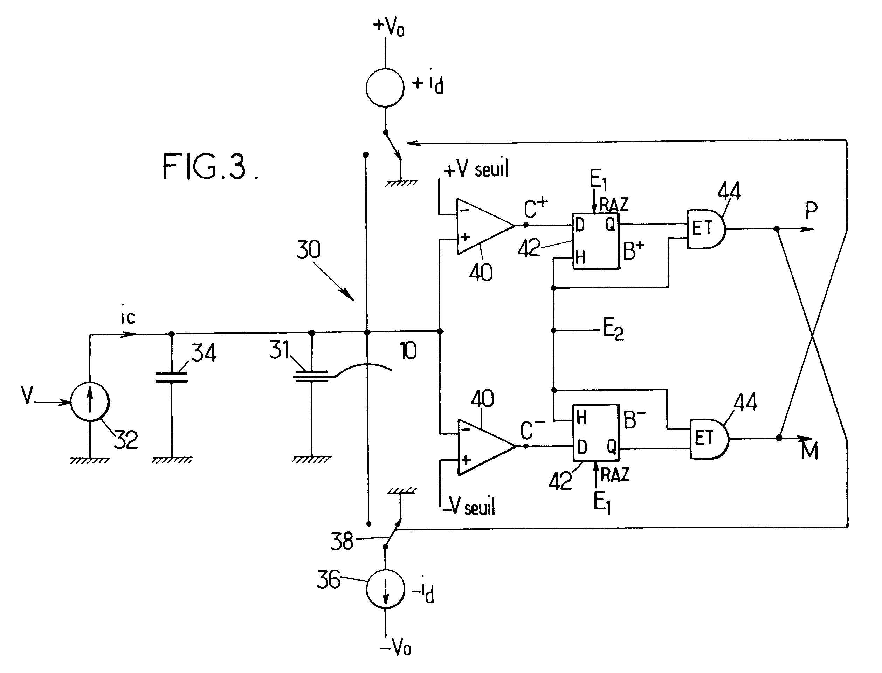

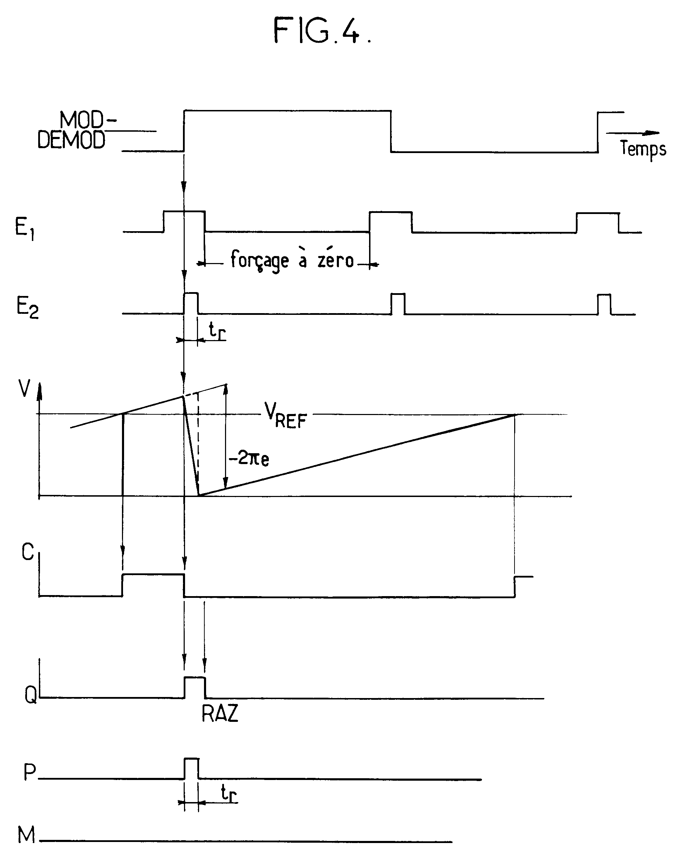

Pour atteindre ce résultat, le générateur de rampe 30 peut avoir la constitution montrée en figure 3. Les signaux apparaissant aux points du générateur indiqués par des lettres peuvent alors avoir l'allure indiquée sur les lignes portant les lettres correspondantes en figure 4.

La tension appliquée aux moyens déphaseurs électrooptiques 31, représentés par un condensateur équivalent sur la figure 3, est générée par charge du condensateur sous un courant $i_c$ constant, mais modifiable, provenant d'un générateur de courant 32 commandé en tension. La plupart des déphaseurs électro-optiques ayant une capacité faible, ils sont très sensibles aux capacités parasites. Pour écarter ce défaut, un condensateur 34, ayant généralement une capacité de 100 à 200 pF, est monté en parallèle avec le déphaseur.

Les retours à zéro de la rampe sont effectués par amenée de la quantité de charges électriques requise pour modifier le déphasage de $2\pi$. Cette amenée s'effectue par l'une ou l'autre de deux branches identiques, sauf en ce qui concerne leur polarité d'alimentation $+V_0$ ou $-V_0$, suivant le sens de la rampe.

La branche qui intervient en cas de pente positive comporte un générateur 36 de courant constant $-i_d$ et un interrupteur qui, au repos, oriente le courant à la masse et, pendant la durée $t_r$ calibrée de créneaux de tension qu'il reçoit, oriente le courant vers le condensateur 34.

Les interrupteurs 38 sont commandés par des branches de détection et de mesure ayant la même constitution. Chaque branche a un comparateur d'entrée 40 de comparaison de la tension aux bornes du condensateur 34 avec une valeur $+V_{SEUIL}$ ou $-V_{SEUIL}$, à peu près égale à la valeur de la tension aux bornes du déphaseur qui donne un déphasage de $2\pi$, mais légèrement inférieure.

La sortie de chaque comparateur 40 attaque l'entrée D d'une bascule synchrone 42 dont la sortie Q est reliée à une entrée d'une porte ET 44 dont l'autre entrée est reliée à l'entrée d'horloge H de la bascule pour être commandée simultanément.

Le fonctionnement des bascules est cadencé par :
- des signaux $E_1$ de commande du multiplexeur analogique de remise à zéro, appliqués sur les entrées RAZ de forçage à zéro des bascules,
- des signaux $E_2$ d'horloge, ayant la durée $t_r$, appliqués sur les entrées d'horloge des bascules, chacune entièrement contenue dans un signal $E_1$.

Les signaux $E_1$ sont élaborés à partir des transitions du signal MOD de période T et constitués de créneaux dont chacun encadre temporellement une inversion du signal MOD et est suffisamment large pour laisser le temps nécessaire au transfert des charges aux condensateurs 31 et 34 de s'achever.

Chaque interrupteur 38 est maintenu en conséquence orienté vers les condensateurs pendant la durée des créneaux de durée $t_r$ provenant de la porte ET respective.

La figure 4 montre un exemple de fonctionnement du générateur 30, pour un sens donné de la vitesse de rotation $\Omega$ et donc des rampes.

Le générateur de rampe fournit un courant $i_c$ proportionnel à sa tension d'entrée et provenant par exemple de la sortie de l'intégrateur, donc qui doit être représentatif de la vitesse $\Omega$. La tension V aux bornes des condensateurs augmente linéairement dans le temps. Lorsqu'elle dépasse le seuil $V_{SEUIL}$, le comparateur 40 passe à l'état 1.

Lorsque $E_2$ passe à 1 l'état du comparateur est transféré à la sortie Q de la bascule 42 et la porte ET 44 fournit le signal P, de même durée que $E_2$. Ce signal P aiguille la source 36 correspondante sur les condensateurs 31 et 34, diminue la tension d'une valeur correspondant à un changement de phase de $2\pi$.

Dès retour de $E_1$ à l'état zéro, la bascule 42 est remise à zéro et elle y reste jusqu'au prochain dépassement de $V_{SEUIL}$.

Le décalage de tension des condensateurs 32 et 34 n'est pas instantané, les courants de décharge étant fixés ; il nécessite la durée $t_R$, pendant laquelle la rampe de tension se serait poursuive si $t_R$ avait été nulle, comme indiqué par une ligne en tirets sur la figure 4.

La variation réelle de phase $2\pi_E$ provoquée par l'apport des charges peut s'écrire $2\pi(1+\varepsilon)$ où $\varepsilon$ est très faible par rapport à 1.

Le signe de $\varepsilon$ peut être mesuré au cours de la demi-période de modulation qui suit la remise à zéro et être utilisé pour corriger $2\pi_E$ pour arriver à $2\pi$ en réglant les courants de décharge $\pm i_d$.

Le mode de réalisation qui vient d'être décrit n'est pas le seul possible. En particulier il n'est pas nécessaire que le dipositif comporte deux branches. On peut utiliser un générateur de transfert de charges permettant d'injecter des charges de l'un ou l'autre de signe. Un interrupteur unique permet alors d'effectuer l'apport de charges. La polarité du générateur peut être déduite du signe de la rampe, avant l'instant où la remise à zéro devient nécessaire.

## Revendications

1. Gyromètre comportant un guide diélectrique d'ondes en anneau (10); une source électromagnétique munie d'un séparateur pour envoyer dans l'anneau deux ondes contrarotatives provenant de la source ; un détecteur d'interférence (22) recevant les ondes contrarotatives ; des premiers moyens électro-optiques commandés pour donner aux ondes une modulation périodique alternative et symétrique de phase, à une période sensiblement double du temps de parcours de l'anneau, placé en amont de l'anneau pour une onde et en aval pour l'autre ; des seconds moyens (31), pouvant être confondus avec les premiers moyens, attaqués par un générateur (30) de rampe de déphasage de pente réglable, placés en amont de l'anneau pour une onde et en aval pour l'autre ; et des moyens électroniques de bouclage et de mesure commandant le sens et la valeur de la pente de la rampe pour annuler le déphasage des ondes reçues par le détecteur d'interférence, caractérisé en ce qu'il comporte de plus des moyens pour effectuer une remise a zero, par variation de $2\pi$, du générateur de rampe de déphasage en réponse à des inversions de polarité des premiers moyens électro-optiques.

2. Gyromètre selon la revendication 1, caractérisé en ce que le générateur de rampe comporte un générateur de courant constant (32) ajustable, alimentant un condensateur (34) monté en parallèle avec un déphaseur électro-optique (31) constituant les seconds moyens et en ce que les moyens de retour à zéro comprennent un second générateur de courant (36) fournissant une quantité de charges modifiant la phase de $2\pi$ en un temps inférieur d'au moins un ordre de grandeur à la période de la modulation.

3. Gyromètre selon la revendication 2, caractérisé en ce que les moyens de retour à zéro comprennent au moins un générateur de transfert de charge et un interrupteur pour, pendant la durée calibrée $t_r$ des créneaux de tension qu'il reçoit, orienter un courant ($i_d$) fourni dans le sens convenable par le générateur, vers le condensateur (34).

4. Gyromètre selon la revendication 2, caractérisé en ce que les moyens de retour à zéro comprennent deux branches ayant chacune un second générateur de courant constant, les courants étant de signes opposés ($i_d$ et $-i_d$), et chacune un interrupteur (38) qui, au repos, oriente le courant à la masse et, pendant la durée $t_r$ calibrée de créneaux de tension qu'il reçoit, oriente le courant vers le condensateur (34).

5. Gyromètre selon la revendication 4, caractérisé en ce que chaque interrupteur (38) est commandé par une branche de détection et de mesure ayant un comparateur d'entrée (40) de comparaison de la tension aux bornes du condensateur (34) avec un seuil légèrement inférieur à la valeur de la tension aux bornes du déphaseur qui donne un déphasage de $2\pi$, en ce que la sortie du comparateur (40) attaque l'entrée D d'une bascule synchrone (42) dont la sortie Q est reliée à une entrée d'une porte ET (44) dont l'autre entrée est reliée à l'entrée d'horloge (H) de la bascule pour être commandée simultanément, et en ce que le gyromètre comporte une horlogerie fournissant des signaux ($E_1$) de remise à zéro, appliqués sur des entrées RAZ de forçage à zéro des bascules et du multiplexeur analogique et des signaux ($E_2$) d'horloge appliqués sur les entrées d'horloge des bascules et chacune entièrement contenue dans un signal $E_1$.

**Patentansprüche**

1. Gyrometer mit einem ringförmigen dielektrischen Wellenleiter (10); einer elektromagnetischen Quelle, die mit einem Teiler versehen ist, um ausgehend von der Quelle auf den Ring zwei gegenläufige Wellen zu leiten; einem Interferenzdetektor (22), der die gegenläufigen Wellen empfängt; einer ersten elektrooptischen Einrichtung, die so gesteuert wird, daß sie den Wellen eine veränderliche, periodische Modulation bei symmetrischer Phasenlage verleiht, wobei die Periodendauer im wesentlichen das Doppelte der Laufzeit längs des Rings ist, und die bezüglich der einen Welle oberhalb des Rings und bezüglich der anderen Welle unterhalb des Rings angeordnet ist; einer zweiten Einrichtung (31), die gemeinsam mit der ersten Einrichtung vorgesehen sein kann, die bezüglich der einen Welle oberhalb und bezüglich der anderen Welle unterhalb des Rings angeordnet ist und die von einem Phasenverschiebungsrampengenerator (30) mit einstellbarer Steigung angesteuert wird; und einer elektronischen Regel- und Meßeinrichtung, die die Richtung und die Größe der Steigung der Rampe einstellt, um die Phasenverschiebung zwischen den im Interferenzdetektor empfangenen Wellen auszugleichen,
dadurch gekennzeichnet, daß
sie außerdem eine Einrichtung aufweist, um auf eine Vorzeichenumkehr an der ersten elektrooptischen Einrichtung hin eine Null-Einstellung durch Veränderung um $2\pi$ am Phasenverschiebungsrampengenerator vorzunehmen.

2. Gyrometer nach Anspruch 1, dadurch gekennzeichnet, daß der Rampengenerator eine einstellbare Konstantstromquelle (38) aufweist, die einen Kondensator (34) versorgt, der parallel mit einer die zweite Einrichtung bildenden elektrooptischen Phasenverschiebungseinrichtung (31) vorgesehen ist, sowie dadurch, daß die Null-Einstellungseinrichtung einen zweiten Stromgenerator (36) aufweist, der in einer Zeit, die zumindest um eine Größenordnung kleiner ist als die Periodendauer der Modulation, eine die Phase um $2\pi$ ändernde Ladung liefert.

3. Gyrometer nach Anspruch 2, dadurch gekennzeichnet, daß die Null-Einstellungseinrichtung zumindest einen Ladungsübertragungsgenerator aufweist sowie einen Unterbrecher, der in einer kalibrierten Zeitdauer $t_r$ von Spannungsimpulsen, die er empfängt, einen Strom ($i_d$), den er mit geeigneter Richtung vom Generator empfängt, zum Kondensator (34) leitet.

4. Gyrometer nach Anspruch 2, dadurch gekennzeichnet, daß die Null-Einstellungseinrichtung zwei Zweige aufweist, von denen jeder einen zweiten Konstantstromgenerator aufweist, wobei die Ströme entgegengesetztes Vorzeichen haben ($i_d$ und $i_d$), sowie jeweils einen Unterbrecher (38), der in Ruhezeiten den Strom nach Masse leitet und während der kalibrierten Zeitdauer $t_r$ der von ihm empfangenen Spannungsimpulse den Strom zum Kondensator (34) leitet.

5. Gyrometer nach Anspruch 4, dadurch gekennzeichnet, daß jeder Unterbrecher (38) durch einen Erfassungs- und Meßzweig angesteuert wird, der einen Eingangsvergleicher (40) aufweist, um die Klemmspannung des Kondensators (34) mit einem Schwellenwert zu vergleichen, der ein wenig unterhalb des Spannungswerts an den Klemmen der Phasenverschiebungseinrichtung liegt, der eine Phasenverschiebung von $2\pi$ ergibt, daß der Ausgang des Komparators (40) den Eingang D einer Synchronkippschaltung (42) beaufschlagt, deren Ausgang Q mit einem Eingang eines UND-Gatters (44) verbunden ist, dessen anderer Eingang mit dem Takteingang (H) der Kippschaltung verbunden ist, so daß sie gleichzeitig angesteuert werden, und daß das Gyrometer eine Zeitsteuerung aufweist, die Null-Stellungssignale ($E_1$) liefert, die an die RAZ-Rücksetzeingänge der Kippschaltungen sowie an den Analogmultiplexer geliefert werden, sowie Taktsignale ($E_2$), das an die Takteingänge der Kippschaltungen angelegt wird, und das jeweils vollständig innerhalb des Signals $E_1$ liegt.

## Claims

1. Rate gyro comprising a ring-shaped dielectric wave guide (10); an electromagnetic source provided with a splitter for sending two contra-rotating waves to the ring from the source; an interference detector (22) receiving the contra-rotating waves; first electro-optical means placed upstream from the ring for one wave and downstream for the other, and controlled to impart symmetrical alternating periodic phase modulation to the waves at a period that is substantially twice the ring-travel time; second means (31), which can be common with the first means, placed upstream of the ring for one wave and downstream for the other, and driven by a generator of a phase-shifting saw tooth of adjustable slope; and electric loop closing and measuring means controlling the sign and the magnitude of the slope of the saw tooth to cancel the phase shift of the waves received by the interference detector, characterized in that it further comprises means to reset to zero the saw-tooth of the phase shift saw tooth generator, by a variation of $2\pi$, responsive to polarity reversals of the first electro-optical means.

2. Rate gyro according to claim 1, characterized in that the saw-tooth generator has an adjustable constant current generator (32) feeding a capacitor (34) connected in parallel with an electro-optical phase shifter (31) constituting the second means, and in that the reset-to-zero means comprise a second current generator (36) delivering an amount of electrical charges that changes the phase by $2\pi$ in a time that it at least one order of magnitude lesser than the modulation period.

3. Rate gyro according to claim 2, characterized in that the reset-to-zero means comprise at least a charge transfer generator and a switch arranged to direct a current (id) of appropriate polarity from the generator to the capacitor (34) during the preset duration (tr) of the square voltage pulses applied thereto.

4. Rate gyro according to claim 2, characterized in that the reset-to-zero means comprise two branches, each having a second constant current generator, the currents being of opposite polarities ($i_d$ and $-i_d$), and each having a switch (38), which, in rest condition, directs the current to the ground, and, during the preset duration $t_r$ of the square voltage pulse it receives, directs the current toward the capacitor (34).

5. Rate gyro according to claim 4, characterized in that each switch (38) is controlled by a detection and measurement branch having an input comparator (40) for comparing the voltage across the capacitor (34) with a threshold which is slightly lower than the value of the voltage which would cause a phase change of $2\pi$, in that the output of the comparator (40) is applied to a D input of a synchronous flip-flop (42) whose Q output is connected to an input of an AND gate (44) whose other input is connected to the clock input (4) of the flip-flop for simultaneous actuation, and in that the rate gyro comprises clock generating means delivering reset-to-zero signals (E1) on reset inputs for forced reset of the synchronous flip-flop and of the analog multiplexer and delivering clock signals (E2) which are applied to the clock inputs of the flip-flops and are each entirely contained within one signal E1.

# FIG.1.

FIG.2.

MOD

17

10

Ω

λ

12

14

31

16

22

E₁

24

DEM

26

P

M

30

E₁

E₂

28

MOD
DEM  C  E₁

18

20

FIG.3.

EP 0 493 200 B1

# FIG.4.

MOD-DEMOD

E₁

forçage à zéro

E₂

$t_r$

V

V$_{REF}$

$-2\pi e$

C

Q

RAZ

P

$t_r$

M